# EUROPÄISCHE PATENTSCHRIFT

(11) **EP 0 746 486 B1**
(45) Veröffentlichungstag und Bekanntmachung des Hinweises auf die Patenterteilung: **25.11.1998**
(21) Anmeldenummer: 95908937.6
(22) Anmeldetag: 14.02.1995
(51) Int. Cl.: B60T 8/94, B60T 8/34

(54) **HYDRAULISCHE BREMSANLAGE MIT SCHLUPFREGELUNG, INSBESONDERE FÜR MEHRACHSIGE KRAFTFAHRZEUGE**
HYDRAULIC BRAKE SYSTEM WITH SLIP CONTROL, IN PARTICULAR FOR MULTI-AXLE MOTOR VEHICLES
SYSTEME DE FREINAGE HYDRAULIQUE A REGULATION ANTIPATINAGE, NOTAMMENT POUR AUTOMOBILES A ESSIEUX MULTIPLES

(30) Priorität: 23.02.1994 DE 4405672
(43) Veröffentlichungstag der Anmeldung: 11.12.1996
(73) Patentinhaber: ITT Automotive Europe GmbH, 60488 Frankfurt (DE)
(72) Erfinder: DROTT, Peter, D-65936 Frankfurt am Main (DE)
(86) Internationale Anmeldenummer: EP9500529
(87) Internationale Veröffentlichungsnummer: WO9523083

(56) Entgegenhaltungen:
- EP-A- 0 485 367
- DE-A- 1 655 457
- DE-A- 4 029 793
- FR-A- 1 565 110
- GB-A- 2 158 901
- GB-A- 2 191 552

## Beschreibung

Die Erfindung betrifft eine hydraulische Bremsanlage mit Schlupfregelung, insbesondere für mehrachsige Kraftfahrzeuge nach dem Oberbegriff des Anspruchs 1.

Hydraulische Bremsanlagen mit Schlupfregelung sind bisher ausschließlich als mehrkreisige, vorzugsweise zweikreisige Bremsanlagen konzipiert worden, um durch die hierdurch gegebene Redundanz der Bremskreise bei einer Bremskreisleckage eine befriedigende Verzögerung des Fahrzeuges zu erreichen, die den gesetzlichen Vorschriften für Bremsanlagen entspricht. Es wird hierzu auf die Literaturstelle BOSCH Technische Unterrichtung, Pkw-Bremsanlagen, Robert Bosch GmbH., erste Ausgabe vom September 1989, verwiesen.

Da bisher keine Forderungen nach einer Mehrkreisigkeit der Bremsanlagen in den gesetzlichen Vorschriften für Personenkraftwagen in Europa und USA bestehen, ist die Konzeption der mehrkreisigen Bremsanlage, insbesondere auch im Hinblick auf eine Auslegung für Blockierschutz- und/oder Antriebsschlupfregelung als verhältnismäßig aufwendig und teuer zu betrachten. Überdies ergibt sich infolge der Komplexität derartiger hydraulischer Bremsanlagen mit Schlupfregelung eine nicht zu unterschätzende Vielzahl von Möglichkeiten hinsichtlich eines Funktionsausfalls, der sich vorwiegend auf Undichtigkeiten an der Pumpe, am Bremsdruckgeber und an den Druckmodulationsventilen beschränkt.

Aus der gattungsgemäßen GB-A-2191552 ist eine hydraulische Einkreisbremsanlage mit Schlupfregelung bekannt, die einen Bremsdruckgeber aufweist, der über eine Bremsleitung an mehrere Radbremsen angeschlossen ist. Jeder Radbremse ist wenigstens ein Druckmodulationsventil zugeordnet, das in Abhängigkeit von Sensoren zur Erfassung der Raddrehzahlen sowie durch die Verwendung einer Auswerteschaltung zur Steuerung des Radschlupfes den Druckverlauf in den Radbremsen steuert. Zur radschlupfabhängigen Bremsdruckregelung steht die Saugleitung einer Pumpe unmittelbar mit einem am Bremsdruckgeber angeordneten, gegenüber der Atmosphäre offenen Vorratsbehälter in Verbindung, so daß in allen Phasen der Radbremsdruckregelung ausschließlich vom Vorratsbehälter Druckmittel entnommen und zu den Radbremsen gefördert wird. Ferner weist die Bremsanlage in der Bremsleitung eine ein Mehrwegeventil und eine einen Druckaufnehmer aufweisende Überwachungseinrichtung auf, womit der an den Druckmodulationsventilen anstehende Druck erfaßt wird. Eine Leckage des in der Grundstellung geschlossenen Druckmodulationsventils hat den Nachteil, daß Druckmittel aus dem Verratsbehälter entweichen kann sowie die Pumpe und der Bremsdruckgeber ausfallen können.

Daher ist es die Aufgabe der Erfindung, die Nachteile der bekannten hydraulischen Bremsanlage mit Schlupfregelung unter Beibehaltung einer Fremdbremsungsfunktion zu beseitigen.

Diese Aufgabe wird erfindungsgemäß durch die Merkmale des Patentanspruchs 1 gelöst.

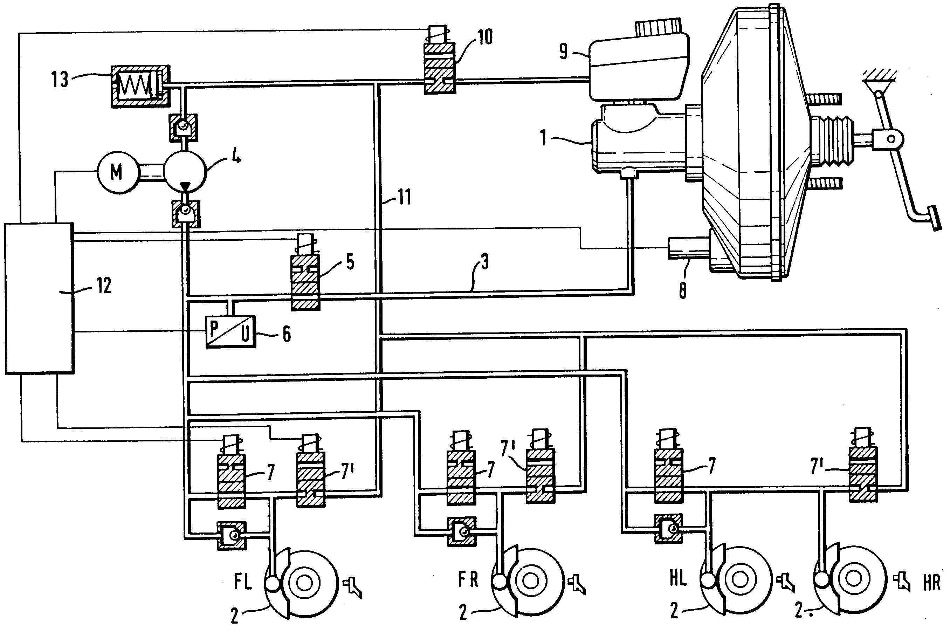

Die in den Unteransprüchen der Erfindung aufgezeigten Merkmale, Vorteile und Anwendungsmöglichkeiten werden im nachfolgenden anhand einer Beschreibung eines Ausführungsbeispiels gemäß Figur 1 näher erläutert.

Die Figur 1 zeigt den hydraulischen Schaltplan für eine schlupfgeregelte Bremsanlage, die auf den bisher weitgehend aus dem Stand der Technik bekannten Funktionsbaugruppen beruht.

Mit Bezugsziffer 1 ist der Bremsdruckgeber bezeichnet, der einen Hauptzylinder mit daran angeflanschtem Vakuumverstärker aufweist. Am Hauptzylinder des Bremsdruckgebers 1 schließt sich eine Bremsleitung 3 an, in die ein Mehrwegeventil 5 geschaltet ist und die mit einer Pumpe 4 und den in die Druckmittelabzweigen der Bremsleitung 3 eingesetzten Druckmodulationsventilen 7, 7' versehen ist. Die den Radbremsen 2 zugeordneten Druckmodulationsventile 7, 7' sind in der vorgeschlagenen Ausführungsweise als 2/2-Wegeventil ausgeführt. Andere Schaltungsvarianten wie 3/2- oder 3/3-Wegeventile sind je nach gewünschten Druckgradientenverlauf bei Wunsch oder Bedarf denkbar. Die Radbremsen 2 der Hinterachse sind über ein Paar Druckmodulationsventile 7, 7' gemeinsam geregelt, während die Radbremsen 2 der Vorderachse radindividuell über entsprechende Druckmodulationsventile 7, 7' geregelt werden. Varianten hinsichtlich der Regelkanalaufteilung sind möglich, jedoch nicht Gegenstand der Erfindung. Zwischen dem bereits angegebenen Mehrwegeventil 5 in der Bremsleitung 3 und dem Pumpenanschluß an die Radbremsen 2 befindet sich ferner ein Druckaufnehmer 6, der gleichfalls Bestandteil der Überwachungseinrichtung ist. Mit Bezugszeichen 10 ist ein Sperrventil angegeben, das den auf dem Hauptzylinder aufgesetzten Druckmittelvorratsbehälter 9 bei Bedarf mit der Saugseite der Pumpe 4 verbindet. Eine Druckmittelrücklaufleitung 11 sorgt im Schlupfregelfalle für ein ungehindertes Zurückströmen von Druckmittel zur Pumpe 4, das während der Druckabbauphase jeweils über das elektromagnetisch offen geschaltete Druckmodulationsventil 7' zu dem der Pumpe 4 zugeordneten Druckmittelsammler 13 gelangt. Mit Bezugsziffer 8 ist ein Wegaufnehmer bezeichnet, der beispielhaft am Vakuumbremskraftverstärker angebracht ist, um die manuelle Betätigung der Bremse zu überwachen. Der Wegaufnehmer 8, der Druckaufnehmer 6, sowie das Mehrwegeventil 5 und das Sperrventil 10 sind mit einer elektronischen Auswerteschaltung 12 verbunden, die vorzugsweise Bestandteil des bisher für die Schlupfregelung der Bremse verwendeten elektronischen Reglers ist. Auf die Notwendigkeit zum Anschluß der Druckmodulationsventile 7, 7' sowie der Raddrehzahlsensoren und des elektrischen Antriebs für die Pumpe 4 an die Auswerteschaltung 12 im elektronischen Regler wird nicht explizit eingegangen.

Aufgrund des nunmehr vollständig erläuterten schaltungstechnischen Aufbaus der erfindungsgemäßen Bremsanlage wird im nachfolgenden die Erfindung hinsichtlich ihrer Wirkungsweise herausgestellt.

In der Bremslösestellung sowie in der manuell betätigten, schlupffreien Bremsbetätigungsstellung befinden sich alle Ventile in der abbildungsgemäßen Schaltstellung. Damit ist eine ungehinderte Druckmittelverbindung zwischen dem Bremsdruckgeber 1 und den Radbremsen 2 sichergestellt. Zur Dichtigkeitsüberprüfung der an den Bremsdruckgeber 1 angeschlossenen Bauteile wird in der Bremslösestellung das Mehrwegeventil 5 elektromagnetisch über ein Ansteuersignal der Auswerteschaltung 12 elektromagnetisch in Sperrstellung geschaltet, so daß ausschließlich die zum Mehrwegeventil 5 stromabwärts angeordneten Druckmodulationsventile 7, 7' sowie die daran angeschlossenen Druckmittelpfade zu den Radbremsen und zur Pumpe 4 mittels des Druckaufnehmers 6 überwacht werden. Da das Bremsensystem in der Bremslösestellung zunächst drucklos verharrt wird zur Dichtigkeitsüberprüfung die Pumpe 4 mittels eines von der Auswerteschaltung 12 angesteuerten Elektromotors kurzzeitig betätigt, bis sich ein gewünschtes Druckniveau zwischen der Pumpe 4, dem Mehrwegeventil 5 und den angeschlossenen Radbremsen einstellt. Nach dem Stillsetzen der Pumpe 4 erfaßt der Druckaufnehmer 6 etwaige Druckänderungen in den Radbremsleitungen, die für eine festgelegte Zeitdauer mit den in einem Kennfeld der Auswerteeinheit 12 abgelegten Solldaten verglichen werden. Wird anhand dieser Daten ein unzulässiger Druckabfall in den zu den Radbremsen 2 führenden Druckmittelleitungen festgestellt, so kann durch gezieltes wechselweises Absperren der Druckmodulationsventile 7 einzelner Radbremsen der jeweils leckagebetroffene Druckmittelpfad ermittelt werden.

Zur Eingrenzung der Leckagestelle auf radbremsseitige oder ventilseitige Leckverluste erfolgt in einem weiteren Prüfschritt eine exakte Ortung der Leckstelle, indem der leckgeschlagene Druckmittelpfad mittels dem zunächst noch geöffneten Druckmodulationsventil 7 gesperrt wird. Ein Stillstand des Druckabfalls oder ein etwaiger hierdurch nur noch geringfügiger Druckabfall wäre sodann ein Anzeichen für einen leckgeschlagenen Radbremszylinder.

Sowohl die auf die Radbremsgruppen bezogene Leckageprüfung wie auch die Individual-Leckageprüfung einer jeden Radbremse setzt ein entsprechendes Prüfdruckniveau in der Bremsleitung 3 voraus, so daß während jedes einzelnen Prüfabschnittes der erforderliche Prüfdruck mittels des Druckaufnehmers 6 und der Auswerteeinheit 12 zu überwachen ist, ggf. der Prüfschritt zu unterbrechen ist, um über die Pumpe 4 nach Kurzzeitbetrieb in der Bremsleitung 3 wieder den nötigen Prüfdruck einzustellen.

Durch die vorgeschlagene Schaltungsanordnung ist jedoch die Überwachungsfunktion nicht auf die Bremslösestellung beschränkt, sondern ermöglicht im Zusammenspiel mit der fußkraftproportional eingesteuerten Normalbremsstellung die Erkennung von stetig fortschreitenden Leckagen bei jeder Bremsung. Denn mit der Betätigung des Bremsdruckgebers 1 gelangen über den am Bremsdruckgeber 1 angebrachten Wegaufnehmer 8 entsprechende Signale zur Auswerteschaltung 12. Da sich das Mehrwegeventil 5 während der Bremsbetätigung in der elektromagnetisch nicht erregten stromlos offenen Schaltstellung befindet, gelangt fußkraftproportional eingesteuerter Bremsdruck über die Bremsleitung 3 zu den in der Grundstellung offen geschalteten Druckmodulationsventilen 7 und damit zu den Radbremsen 2. Die Pumpe 4 befindet sich im Stillstand, so daß der Druckaufnehmer 6 ausschließlich den fußkraftproportional angesteuerten Druck erfaßt, der gleichfalls als elektrisches Signal der Auswerteschaltung 12 zugeführt wird. Da sowohl die Druckänderung im Bremskreis wie auch die Wegänderung am Bremsdruckgeber 1 in einem bestimmten Verhältnis stehen, erfolgt in der Auswerteschaltung 12 ein permanenter Vergleich der vom Druckaufnehmer 6 gelieferten Eingangssignal mit den vom Wegaufnehmer 8 übermittelten Eingangssignalen.

Werden mittels der Auswerteschaltung 12 unzulässige Abweichungen registriert, so erfolgt eine Teilstillegung der Bremsanlage, wozu entweder der Bremsdruckgeber 1 oder der schadhafte Radbremsanschluß über das Mehrwegeventil 5 bzw. über das der schadhaften Radbremse 2 zugehörige Druckmodulationsventil 7 abgesperrt wird. Im erstgenannten Fall, das heißt bei defektem Bremsdruckgeber 1 erfolgt die Bremsung ausschließlich über die Betätigung der Pumpe 4, die vom Druckaufnehmer 6 überwacht wird und im Bedarfsfalle auch unter Zuhilfenahme der übermittelten Daten des Druckaufnehmers 6 geregelt werden kann. Im schaltungstechnischen Zusammenwirken mit dem Wegaufnehmer 8 ist ein permanente Überwachung der gewünschten und manuell eingesteuerten Betätigung des Bremsdruckgebers 1 gewährleistet, die als Prioritätssignal der Pumpenregelung beim Ausfall des Bremsdruckgebers 1 zugrunde gelegt werden kann.

Die Pumpe 4 saugt sodann ausschließlich über das geöffnete Sperrventil 10 Flüssigkeit aus dem Vorratsbehälter 9 des Hauptzylinders an. Solange jedoch der Bremsdruckgeber 1 funktionsfähig ist, erfolgt die Druckversorgung über den Hauptzylinder, bzw. in der Schlupfregelung über das im Druckmittelsammler 13 gespeicherte Volumen, das beim Öffnen der Druckmodulationsventile 7' über die Rücklaufleitung ergänzt wird.

Kommt die Leckage jedoch durch eine defekte Radbremse 2 zustande, so ist durch gezieltes wechselseitiges Abschalten einzelner Bremsleitungspfade mittels der Druckmodulationsventile 7 die undichte Radbremse 2 zu ermitteln und permanent durch das Druckmodulationsventil 7 zu sperren.

Durch die Erfindung ist eine schlupfgeregelte Einkreis-Bremsanlage mit den bereits erläuterten Merkmalen geschaffen, die es ermöglicht, den baulichen Aufwand für die Pumpe 4, die Bremsleitung und den Hauptzylinder des Bremsdruckgebers 1 zu halbieren und durch die geeignete Anordnung eines Druckaufnehmers 6 sowie eines Mehrwegeventils 5 und Sperrventils 10 eine Dichtheitsüberprüfung der einzelnen, leckagegefährdeten Baugruppen sowohl in der Bremslösestellung wie auch in der Betriebsbremsstellung vorzunehmen, so daß entstehende Leckagen frühzeitig erkannt werden und ggf. durch eine Teilstillegung der Bremsanlage nicht zu einer Zunahme des Flüssigkeitsverlustes führen. Damit ist eine Einkreisbremsanlage geschaffen, die unter Berücksichtigung der in der Praxis möglicherweise auftretenden Undichtigkeiten funktionsfähig bleibt.

### Bezugszeichenliste

- 1: Bremsdruckgeber
- 2: Radbremsen
- 3: Bremsleitung
- 4: Pumpe
- 5: Mehrwegeventil
- 6: Druckaufnehmer
- 7, 7': Druckmodulationsventil
- 8: Wegaufnehmer
- 9: Druckmittelvorratsbehälter
- 10: Sperrventil
- 11: Rücklaufleitung
- 12: Auswerteschaltung
- 13: Druckmittelsammler

## Patentansprüche

1. Hydraulische Bremsanlage mit Schlupfregelung, insbesondere für mehrachsige Kraftfahrzeuge, die einkreisig aufgebaut ist, mit einer Bremsleitung (3), die einen Bremsdruckgeber (1) mit mehreren Radbremsen (2) verbindet, die in Parallelschaltung an die Bremsleitung (3) angeschlossen sind, mit wenigstens einem jeder Radbremse (2) zugeordneten Druckmodulationsventil (7,7'), das die durch die Bremsleitung (3) bestehende hydraulische Verbindung zur Radbremse (2) steuert, mit einer Pumpe (4) , die Druckmittel zu den Radbremsen (2) fördert, mit Sensoren zur Erfassung der Raddrehzahlen sowie mit einer Auswerteschaltung (12) zur Steuerung des Radschlupfes mittels der Druckmodulationsventile (7,7'), wobei die hydraulische Verbindung des Bremsdruckgebers (1) mit den Radbremsen (2) durch die eine Bremsleitung (3) hergestellt ist, an die die Pumpe (4) angeschlossen ist, mit einem von der Auswerteschaltung (12) gesteuerten Mehrwegeventil (5) und einem mit der Auswerteschaltung (12) verknüpften Druckaufnehmer (6) in der Bremsleitung (3), der den an den Druckmodulationsventilen (7,7') der Radbremsen (2) anstehenden Druck erfaßt, mit einem dem Bremsdruckgeber (1) zugeordneten Druckmittelvorratsbehälter (9), der über eine Saugleitung mit der Saugseite der Pumpe (4) verbunden ist, **dadurch gekennzeichnet**, daß in die Saugleitung ein Sperrventil (10) geschaltet ist, und daß eine Druckmittelrücklaufleitung (11) vorgesehen ist, die Druckmittel während einer schlupfgeregelten Druckabbauphase über das offen geschaltete Druckmodulationsventil (7') zu einem an der Saugleitung der Pumpe (4) angeschlossenen Druckmittelspeicher (13) gelangen läßt.

2. Hydraulische Bremsanlage nach Anspruch 1, dadurch **gekennzeichnet**, daß am Bremsdruckgeber (1) ein Wegaufnehmer (8) angebracht ist, der die manuelle Betätigung der Bremse überwacht.

3. Hydraulische Bremsanlage nach Anspruch **1**, dadurch **gekennzeichnet**, daß zwischen dem Sperrventil (10) und der Pumpe (4) an die Saugleitung eine Druckmittelrücklaufleitung (11) angeschlossen ist, die mit den zum Druckabbau in den Radbremsen (2) vorgesehenen Druckmodulationsventilen (7') in Verbindung steht.

4. Hydraulische Bremsanlage nach Anspruch 1, dadurch **gekennzeichnet**, daß zur Überprüfung des an dem Druckmodulationsventil (7) der Radbremse (2) anstehenden hydraulischen Drucks das in der Bremsleitung (3) befindliche Mehrwegeventil (5) elektromagnetisch erregt ist, wodurch die Druckmittelverbindung zum Bremsdruckgeber (1) getrennt ist, und daß der Druckaufnehmer (6) von einem durch die Pumpe (4) in der Druckmittelverbindung zu den Druckmodulationsventilen (7) erzeugten definierten Druckniveau beaufschlagt ist, wobei der Bremsdruckgeber (1) nicht betätigt ist.

5. Hydraulische Bremsanlage nach Anspruch **4**, dadurch **gekennzeichnet**, daß der vom Druckaufnehmer (6) erfaßte hydraulische Druck (Istwert) nach Stillsetzen der Pumpe (4) über ein definiertes Zeitintervall als Spannungssignal von einer elektronischen Auswerteschaltung (12) erfaßt ist, die den Istwert mit dem in einem Kennfeld der Auswerteschaltung (12) gespeicherten Sollwert vergleicht.

6. Hydraulische Bremsanlage nach Anspruch **4** und **5**, dadurch **gekennzeichnet**, daß zur Ermittlung des an allen Radbremsen (2) anstehenden Drucks sämtliche den Druckaufbau in den Radbremsen (2) steuernde Druckmodulationsventile (7) in Offenstellung geschaltet sind, und daß zur Ermittlung des an einzelnen Radbremsen (2) anstehenden Drucks, die den Druckaufbau steuernden Druckmodulationsventile (7) der nicht zu überprüfenden Radbremsen (2) geschlossen sind.

7. Hydraulische Bremsanlage nach Anspruch **2**, dadurch **gekennzeichnet**, daß zur Überwachung der Druckmittelvolumenaufnahme in den Radbremsen (2) das Mehrwegeventil (5) in seiner elektromagnetisch nicht erregten offenen Grundstellung verharrt, daß der Druckaufnehmer (6) dem in der schlupffreien Bremsbetätigungsstellung wirksamen hydraulischen Druck des Bremsdruckgebers (1) ausgesetzt ist, und daß der Wegaufnehmer (8) am Bremsdruckgeber (1) den Betätigungsweg des Arbeitskolbens im Bremsdruckgeber (1) vorzugsweise analog erfaßt und mit der elektronischen Auswerteschaltung (12) verknüpft ist, die ein den Betätigungsweg vorzugsweise proportionales Spannungssignal mit dem vom Druckaufnehmer (6) gelieferten Spannungssignal vergleicht.

8. Hydraulische Bremsanlage nach Anspruch **7**, dadurch **gekennzeichnet**, daß die Auswerteschaltung (12) die Veränderung des hydraulischen Drucks zur Veränderung des Betätigungsweges erfaßt und bei Abweichung einer proportionalen Druck- und Wegveränderung eine Teilstillegung der Bremsanlage bewirkt.

9. Hydraulische Bremsanlage nach Anspruch **8**, dadurch **gekennzeichnet**, daß die Teilstillegung der Bremsanlage jeweils durch wechselweises Absperren einzelner Druckmittelverbindungen zu den Radbremsen (2) erfolgt, indem jeweils das einer Radbremse (2) zugeordnete Druckmodulationsventil (7) durch Steuersignale der Auswerteschaltung (12) elektromagnetisch in Schließstellung geschaltet ist, und daß das zugehörige, in Sperrstellung befindliche Druckmodulationsventil (7') die hydraulische Verbindung zum Bremsdruckgeber (1) und zur Pumpe (4) trennt.

10. Hydraulische Bremsanlage nach Anspruch **8**, dadurch **gekennzeichnet**, daß in der Teilstillegung der Bremsanlage bei Leckage des Bremsdruckgebers (1) die Bremsleitung (3) durch das Mehrwegeventil (5) getrennt ist, daß das Sperrventil (10) in der Verbindung vom Druckmittelvorratsbehälter (9) zur Saugseite der Pumpe (4) geöffnet ist, und daR der Bremsdruck ausschließlich durch die Pumpe (4) erzeugt und mittels Druckaufnehmer (6) überwacht ist.

## Claims

1. Hydraulic brake system with slip control, in particular for multiple-axle automotive vehicles, which has a single-circuit design and includes a brake line (3) that connects a braking pressure generator (1) to several wheel brakes (2) which are connected in parallel to the brake line (3), at least one pressure modulation valve (7,7') associated with each wheel brake (2) to control the hydraulic connection to the wheel brake (2) provided by the brake line (3), a pump (4) which supplies pressure fluid to the wheel brakes (2), sensors to determine the rotational speed of the wheels and an evaluating circuit (12) to control the wheel slip by way of the pressure modulation valves (7,7'), wherein the hydraulic connection between the braking pressure generator (1) and the wheel brakes (2) is established by the brake line (3) to which the pump (4) is connected, a multi-way valve (5) controlled by the evaluating circuit (12) and a pressure sensor (6) in the brake line (3), which sensor is linked to the evaluating circuit (12) and senses the pressure applied to the pressure modulation valves (7,7') of the wheel brakes (2), and a pressure fluid supply reservoir (9) associated with the braking pressure generator (1) and connected to the suction side of the pump (4) by way of a suction line, **characterized** in that a shut-off valve (10) is inserted into the suction line, and in that a pressure fluid return line (11) is provided which permits the propagation of pressure fluid during a slip-controlled pressure reduction period to a pressure fluid reservoir (13) connected to the suction line of the pump (4) by way of the pressure modulation valve (7') switched to its open state.

2. Hydraulic brake system as claimed in claim 1,
**characterized** in that a travel sensor (8) is fitted to the braking pressure generator (1) to monitor the manual operation of the brake.

3. Hydraulic brake system as claimed in claim 1,
**characterized** in that a pressure fluid return line (11) is connected to the suction line between the shut-off valve (10) and the pump (4) and is in connection with the pressure modulation valves (7') provided for the pressure reduction in the wheel brakes (2).

4. Hydraulic brake system as claimed in claim 1,
**characterized** in that the multi-way valve (5) inserted in the brake line (3) is electromagnetically excited to check the hydraulic pressure prevailing at the pressure modulation valve (7) of the wheel brake (2), thereby isolating the pressure fluid connection to the braking pressure generator (1), and in that the pressure sensor (6) is acted upon by a defined pressure level produced by the pump (4) in the pressure fluid connection to the pressure modulation valves (7), when the braking pressure generator (1) is not operated.

5. Hydraulic brake system as claimed in claim 4,
**characterized** in that the hydraulic pressure sensed by the pressure sensor (6) (actual value), after deactivation of the pump (4), for a defined period of time, is sensed as a voltage signal by an electronic evaluating circuit (12) which compares the actual value with a nominal value memorized in performance characteristics of the evaluating circuit (12).

6. Hydraulic brake system as claimed in claims 4 and 5,
**characterized** in that for determining the pressure applied to all wheel brakes (2), the pressure modulation valves (7) controlling the pressure increase in the wheel brakes (2) are in their open position, and in that for determining the pressure applied to the individual wheel brakes (2), the pressure modulation valves (7) are closed which control the pressure increase and are associated with the wheel brakes (2) not to be checked.

7. Hydraulic brake system as claimed in claim 2,
**characterized** in that for monitoring the pressure fluid volume absorption in the wheel brakes (2), the multi-way valve (5) remains in its electromagnetically non-energized open basic position, in that the pressure sensor (6) is exposed to the hydraulic pressure of the braking pressure generator (1) acting in the slip-free brake application position, and in that the travel sensor (8) on the braking pressure generator (1) senses the actuating travel of the working piston in the braking pressure generator (1), preferably in analog operation, and is linked to the electronic evaluating circuit (12) which compares a voltage signal, which is preferably proportional to the actuating travel, with the voltage signal supplied by the pressure sensor (6).

8. Hydraulic brake system as claimed in claim 7,
**characterized** in that the evaluating circuit (12) senses the variation of the hydraulic pressure with respect to the variation of the actuating travel and causes a partial deactivation of the brake system in the event of a difference from a proportional pressure and travel variation.

9. Hydraulic brake system as claimed in claim 8,
**characterized** in that the partial deactivation of the brake system is effected by an alternating closure of individual pressure fluid connections to the wheel brakes (2) by electromagnetically switching the pressure modulation valve (7) respectively associated with a wheel brake (2) to its closed position by control signals of the evaluating circuit (12), and in that the associated pressure modulation valve (7') which adopts its closed position severs the hydraulic connection between the braking pressure generator (1) and the pump (4).

10. Hydraulic brake system as claimed in claim 8,
**characterized** in that, during partial deactivation of the brake system on leakage of the braking pressure generator (1), the brake line (3) is isolated by the multi-way valve (5), in that the shut-off valve (10) in the connection from the pressure fluid reservoir (9) to the suction side of the pump (4) is open, and in that the braking pressure is generated exclusively by the pump (4) and is monitored by the pressure sensor (6).

## Revendications

1. Système hydraulique de freinage à régulation du glissement, notamment pour véhicule automobile à plusieurs essieux, qui présente un agencement à circuit unique, comprenant une conduite de frein (3), qui relie un générateur de pression de freinage (1) à plusieurs freins de roue (2) qui sont raccordés en parallèle à la conduite de frein (3), au moins une valve de modulation de pression (7, 7'), qui est associée à chaque frein de roue (2) et commande la liaison hydraulique avec le frein de roue (2) réalisée au moyen de la conduite de frein (3), une pompe (4), qui refoule de l'agent de pression vers les freins de roue (2), des capteurs servant à détecter les vitesses de rotation des roues, un circuit d'exploitation (12) servant à commander le glissement de roue au moyen des valves de modulation de pression (7, 7'), la liaison hydraulique du générateur de pression de freinage (1) avec les freins de roue (2) étant réalisée au moyen de la conduite de frein (3) à laquelle la pompe (4) est raccordée, une valve à plusieurs voies (5) commandée par le circuit d'exploitation (12), un capteur de pression (6), qui est situé dans la conduite de frein (3) et est combiné au circuit d'exploitation (12) et qui détecte la pression régnant sur les valves de modulation de pression (7, 7') des freins de roue (2), et un réservoir d'agent de pression (9) qui est associé au générateur de pression de freinage (1) et est relié au côté d'aspiration de la pompe (4) par une conduite d'aspiration, caractérisé en ce qu'une valve de blocage (10) est montée dans la conduite d'aspiration et en ce qu'il est prévu une conduite de retour d'agent de pression (11) qui, pendant une phase de suppression de pression de la régulation de glissement, fait parvenir de l'agent de pression à un accumulateur d'agent de pression (13), raccordé à la conduite d'aspiration de la pompe (4), en passant par la valve de modulation de pression (7') commutée en position ouverte.

2. Système hydraulique de freinage suivant la revendication 1, caractérisé en ce qu'un capteur de déplacement (8), qui surveille l'actionnement manuel du frein, est monté sur le générateur de pression de freinage (1).

3. Système hydraulique de freinage suivant la revendication 1, caractérisé en ce qu'une conduite de retour d'agent de pression (11), qui communique avec les valves de modulation de pression (7') prévues pour la suppression de pression dans les freins de roue (2), est raccordée à la conduite d'aspiration entre la valve de blocage (10) et la pompe (4).

4. Système hydraulique de freinage suivant la revendication 1, caractérisé en ce que, pour le contrôle de la pression hydraulique régnant sur la valve de modulation de pression (7) du frein de roue (2), la valve à plusieurs voies (5) située dans la conduite de frein (3) est mise en service par la voie électromagnétique, de sorte que la liaison d'agent de pression menant au générateur de pression de frein pression de freinage (1) est isolée, et en ce que le capteur de pression (6) est soumis à un niveau de pression défini produit par la pompe (4) dans la liaison d'agent de pression menant aux valves de modulation de pression (7), le générateur de pression de freinage (1) n'étant pas actionné.

5. Système hydraulique de freinage suivant la revendication 4, caractérisé en ce que la pression hydraulique (valeur réelle) détectée par le capteur de pression (6) est relevée sous forme d'un signal de tension, après mise à l'arrêt de la pompe (4) et pendant un intervalle de temps défini, par un circuit électronique d'exploitation (12) qui compare la valeur réelle à la valeur de consigne rangée en mémoire dans une table caractéristique du circuit d'exploitation (12).

6. Système hydraulique de freinage suivant la revendication 4 ou 5, caractérisé en ce que, pour déterminer la pression régnant sur tous les freins de roue (2), toutes les valves de modulation de pression (7) commandant l'établissement de pression dans les freins de roue (2) sont commutées en position d'ouverture et en ce que, pour déterminer la pression régnant sur les différents freins de roue (2), les valves de modulation de pression (7), commandant l'établissement de pression, des freins de roue (2) qui ne sont pas à contrôler sont fermées.

7. Système hydraulique de freinage suivant la revendication 2, caractérisé en ce que, pour surveiller le volume d'agent de pression reçu dans les freins de roue (2), la valve à plusieurs voies (5) est bloquée dans sa position ouverte de base, non mise en service par la voie électromagnétique, en ce que le capteur de pression (6) est soumis à la pression hydraulique du générateur de pression de freinage (1), cette pression agissant dans la position d'actionnement de frein sans glissement, et en ce que le capteur de déplacement (8) situé sur le générateur de pression de freinage (1) détecte, de préférence d'une manière analogique, le déplacement d'actionnement du piston de travail dans le générateur de pression de freinage (1) et est combiné au circuit électronique d'exploitation (12) qui compare un signal de tension, de préférence proportionnel au déplacement d'actionnement, au signal de tension fourni par le capteur de pression (6).

8. Système hydraulique de freinage suivant la revendication 7, caractérisé en ce que le circuit d'exploitation (12) relève la variation de la pression hydraulique par rapport à la variation du déplacement d'actionnement et, en cas d'écart d'une variation de pression et variation de déplacement proportionnelle, provoque une mise hors service partielle du système de freinage.

9. Système hydraulique de freinage suivant la revendication 8, caractérisé en ce que la mise hors service partielle du système de freinage à chaque fois lieu par blocage alterné des différentes liaisons d'agent de pression menant aux freins de roue (2), la valve de modulation de pression (7) associée à chaque frein de roue (2) étant respectivement commutée en position de fermeture par la voie électromagnétique au moyen de signaux de commande du circuit d'exploitation (12) et en ce que la valve de modulation de pression (7') associée qui se trouve en position de blocage isole la liaison hydraulique menant au générateur de pression de freinage (1) et à la pompe (4).

10. Système hydraulique de freinage suivant la revendication 8, caractérisé en ce que, dans la mise hors service partielle du système de freinage, en cas de fuite du générateur de pression de freinage (1), la conduite de frein (3) est isolée au moyen de la valve à plusieurs voies (5), en ce que la valve de blocage (10) située dans la liaison menant du réservoir d'agent de pression (9) au côté d'aspiration de la pompe (4) est ouvertes et en ce que la pression de freinage est produite exclusivement au moyen de la pompe (4) et est surveillée au moyen du capteur de pression (6).
